# FASCICULE DE BREVET EUROPEEN

(11) **EP 3 223 591 B1**
(45) Date de publication et mention de la délivrance du brevet: **09.05.2018**
(21) Numéro de dépôt: 17160419.2
(22) Date de dépôt: 10.03.2017
(51) Int. Cl.: H05H 7/14, F16L 27/10, H05H 13/04

(54) **DISPOSITIF DE RACCORDEMENT ENTRE TRONÇONS D'ANNEAU DE SYNCHROTRON**
ANSCHLUSSVORRICHTUNG ZWISCHEN SYNCHROTRON-RINGABSCHNITTEN
CONNECTION DEVICE BETWEEN SYNCHROTRON RING SECTIONS

(30) Priorité: 22.03.2016 FR 1652454
(43) Date de publication de la demande: 27.09.2017
(73) Titulaire: European Synchrotron Radiation Facility, 38000 Grenoble (FR)
(72) Inventeur: GOIRAND, Loys, 38500 COUBLEVIE (FR); BROCHARD, Thierry, 38000 GRENOBLE (FR); PASQUAUD, Joel, 38250 VILLARD DE LANS (FR)
(74) Mandataire: Cabinet Beaumont

(56) Documents cités:
- N.ROUVIÈRE: "RF Liners for High Brilliance Beam", PROCEEDINGS OF EPAC '96, SITGES, SPAIN, 9 septembre 1996 (1996-09-09), pages 1036-1038, XP002763564,
- K.KANAZAWA ET AL: "Development of a Bellows Assembly with RF-Shield for KEKB", PROCEEDINGS OF EPAC'96, SITGES, SPAIN, 9 septembre 1996 (1996-09-09), pages 1072-1074, XP002763565,
- M E NORDBY ET AL: "Bellows Design for the PEP-II High Energy Ring Arc Chambers", PROCEEDINGS OF PAC'95, DALLAS TX, USA, 1995, pages 2048-2050, XP002763566,
- C.BLANCH GUTIERREZ ET AL: "Characterisation of the RF Fingers Contact Force for the LHC Warm Vacuum Bellow Modules", PROCEEDINGS OF IPAC'15, RICHMOND,VA, USA, juin 2015 (2015-06), pages 3106-3108, XP002763567,
- H.GHASEM ET AL: "Design of Iranian Light Source RF Shielded Bellows", PROCEEDINGS OF IPAC'14, DRESDEN, GERMANY, juin 2014 (2014-06), pages 252-254, XP002763568,

## Description

### Domaine

La présente demande concerne un dispositif de raccordement électrique entre des tronçons du conduit annulaire d'un synchrotron.

### Exposé de l'art antérieur

Dans un synchrotron en fonctionnement, un faisceau de particules décrit une trajectoire en forme d'anneau. Le faisceau de particules circule dans un conduit dont l'intérieur est sous vide. Le conduit est divisé en tronçons. Par exemple, un synchrotron de plus d'une centaine de mètres de circonférence est divisé en plus d'une centaine de tronçons de longueurs diverses comprises entre 200 mm et 5 m. Chaque tronçon est inclus dans un ou plusieurs électroaimants qui génèrent des champs magnétiques de guidage. Chaque tronçon a des parois conductrices qui délimitent une section intérieure dont la forme est éventuellement diverse selon les tronçons. Les tronçons voisins sont reliés par des dispositifs de raccordement. Des courants permettant le fonctionnement du synchrotron cheminent parallèlement au faisceau dans les parois des tronçons et dans les dispositifs de raccordement. Pour cela, les dispositifs de raccordement ont une continuité électrique axiale qui permet la circulation de ces courants parallèles au faisceau.

Lors d'une phase de maintenance ou de réparation, le conduit peut se trouver rempli d'air extérieur. On doit alors procéder à un dégazage. Lors de ce dégazage, on chauffe l'ensemble du conduit à des températures supérieures à 150°C et on pompe les gaz présents dans le conduit. Lors du chauffage, des dilatations thermiques provoquent des déplacements relatifs entre les extrémités des tronçons voisins. Les dispositifs de raccordement doivent assurer une continuité électrique axiale entre des tronçons dont la position peut varier. L'article de J. T. Seeman et Al. intitulé "Last Year of PEP-II B-Factory Opération" paru dans Proceedings of EPAC08, Genoa, Italy, 2008, 946-950, illustre en figure 8 un tel dispositif de raccordement.

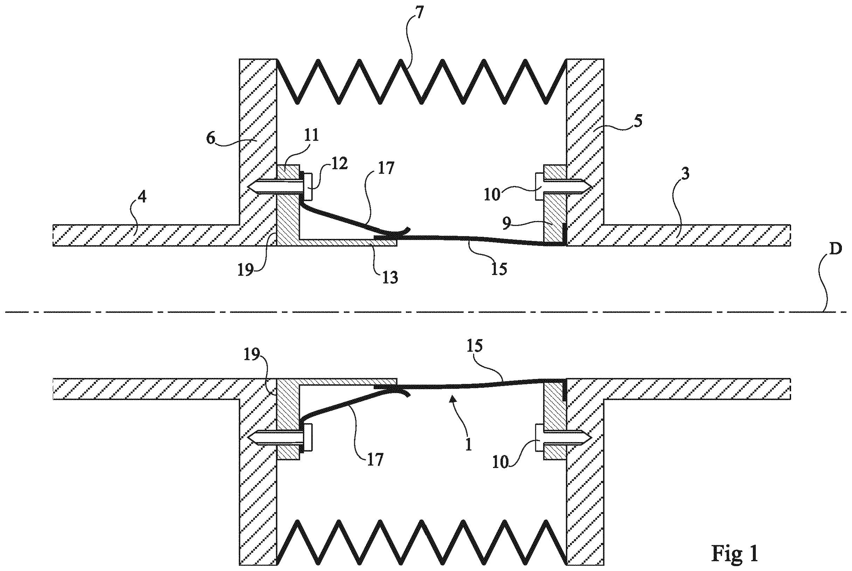

La figure 1 est une coupe schématique d'un dispositif de raccordement 1 similaire au dispositif de la figure 8 de l'article susmentionné, disposé entre des tronçons 3 et 4 d'un conduit annulaire de synchrotron.

Les tronçons 3 et 4 sont tubulaires d'axe commun D. L'axe D correspond à l'axe du conduit, selon lequel un faisceau de particules est destiné à circuler. Les tronçons comportent des brides respectives 5 et 6 qui s'étendent radialement à partir des extrémités en s'éloignant de l'axe D. Un soufflet métallique étanche 7 situé entre les brides est raccordé sur le pourtour des brides par des fixations étanches non représentées.

Le volume délimité par les tronçons 3 et 4, les brides et le soufflet 7 est sous vide, et le dispositif de raccordement 1 est entièrement compris dans ce volume.

Le dispositif de raccordement 1 comprend une couronne 9 fixable à la bride 5 par des vis 10 et une couronne 11 fixable à la bride 6 par des vis 12. La couronne 11 est prolongée axialement par une portion tubulaire 13 de même section intérieure que le tronçon 4.

Le dispositif comprend en outre des lames 15. Chaque lame 15 a une extrémité maintenue entre la couronne 9 et la bride 5 et s'étend axialement dans le prolongement de la surface intérieure du tronçon 3. La lame 15 a son autre extrémité en appui sur l'extérieur de la portion tubulaire 13. Pour chaque lame 15, une lame de ressort 17 a une extrémité en appui sur la lame 15 au niveau de l'appui de la lame 15 sur la portion tubulaire 13. L'autre extrémité de la lame 17 est maintenue en place par une des vis 12.

Les tronçons 3 et 4, la portion tubulaire 13 et les lames 15 sont en des matériaux électriquement conducteurs. La portion tubulaire 13 est en contact électrique avec le tronçon 4 par une zone de contact 19. Chaque lame 15 est en contact électrique avec le tronçon 3. Des contacts électriques entre la portion tubulaire 13 et les lames 15 sont liés à l'appui entre cette portion et ces lames sous la pression des lames de ressorts 17. Des courants peuvent alors s'écouler axialement du tronçon 3 au tronçon 4.

Lors d'un déplacement relatif entre les tronçons 3 et 4, les lames 15 solidaires du tronçon 3 glissent sur la portion tubulaire 13 solidaire du tronçon 4, la portion tubulaire 13 et les lames 15 restant en contact électrique au cours du déplacement.

Un tel dispositif pose divers problèmes de mise en oeuvre, de performances et de fiabilité. L'article de N.Rouvière intitulé "RF Liners for High Brilliance Beam" paru dans Proceedings of EPAC96, Sitges, Spain, 1996, 1036-1038, illustre un dispositif de raccordement similaire.

### Résumé

Ainsi, un objet d'un mode de réalisation est de prévoir un dispositif de raccordement entre deux tronçons successifs d'un conduit de synchrotron, palliant au moins en partie certains des inconvénients décrits ci-dessus.

Ainsi, un mode de réalisation prévoit un dispositif de raccordement électrique entre deux tronçons successifs du conduit annulaire d'un synchrotron, comprenant : des première et deuxième pièces d'extrémité adaptées à être fixées aux tronçons, chacune comportant une portion tubulaire à facettes ; des lames élastiques et électriquement conductrices, dont chacune est en appui sur chacune des deux portions tubulaires, chaque appui étant à coulissement sur une desdites facettes ; et au moins un bras en appui sur chaque lame, chaque bras étant solidaire de l'une des pièces d'extrémité.

Selon un mode de réalisation, ledit au moins un bras comprend des premier et deuxième bras en appui radial vers l'intérieur sur chaque lame, le premier bras étant solidaire de la première pièce d'extrémité et le deuxième bras étant solidaire de la deuxième pièce d'extrémité.

Selon un mode de réalisation, les extrémités de chaque lame se prolongent par des portions recourbées.

Selon un mode de réalisation : les portions recourbées sont recourbées sur plus d'un demi-tour ; et pour chaque lame, chacun des bras en appui sur la lame est solidaire d'un troisième bras comprenant une surface plane en appui sur la portion recourbée.

Selon un mode de réalisation, les portions recourbées sont recourbées sur un angle compris entre 185 et 220 degrés.

Selon un mode de réalisation, le dispositif comporte des éléments de guidage des lames.

Selon un mode de réalisation, les éléments de guidage des lames sont des cloisons disposées entre les facettes des portions tubulaires.

Selon un mode de réalisation, le jeu total entre chaque extrémité de lame et les cloisons de guidage associées est compris entre 0,4 et 0,6 mm.

Selon un mode de réalisation, la portion tubulaire d'une pièce d'extrémité destinée à être fixée à un premier tronçon a une section intérieure du côté de l'extrémité du dispositif de forme identique à 0,5 mm près à celle de la section intérieure du premier tronçon.

Selon un mode de réalisation, chaque portion tubulaire a des parois dont l'épaisseur est inférieure à 0,5 mm à l'extrémité de la portion tubulaire située du côté des lames.

Selon un mode de réalisation, la distance entre ledit au moins un bras et la facette la plus proche dudit au moins un bras est comprise entre 1 et 5 mm.

Un mode de réalisation prévoit un synchrotron comprenant des tronçons raccordés par un dispositif tel que ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une coupe schématique d'un dispositif de raccordement disposé entre des tronçons d'un conduit annulaire de synchrotron ;
la figure 2 est une vue en coupe et en perspective d'un mode de réalisation d'un dispositif de raccordement ;
la figure 3 est une coupe partielle et schématique d'un autre mode de réalisation d'un dispositif de raccordement ; et
la figure 4 est une coupe partielle et schématique d'un autre mode de réalisation d'un dispositif de raccordement.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Dans la description qui suit, sauf précision contraire, le qualificatif "conducteur" désigne des éléments électriquement conducteurs.

Dans la description qui suit, des dispositifs de raccordement entre deux tronçons d'un conduit de synchrotron sont représentés et détaillés dans une position de référence correspondant à des tronçons alignés, c'est-à-dire en l'absence de déplacement relatif entre les tronçons.

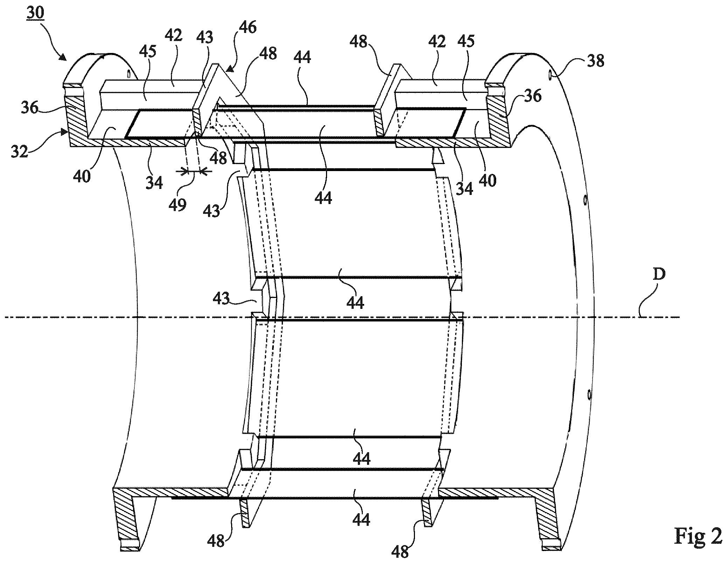

La figure 2 est une vue en coupe et en perspective d'un mode de réalisation d'un dispositif 30 de raccordement entre deux tronçons d'un conduit annulaire d'un synchrotron.

Le dispositif 30 comprend deux pièces d'extrémités 32 d'axe D commun. L'axe D correspond à l'axe d'un faisceau de particules lorsque le dispositif 30 est en place dans le synchrotron en fonctionnement. Chaque pièce d'extrémité 32 comprend une portion tubulaire 34 conductrice et s'étendant axialement. La portion tubulaire 34 est par exemple cylindrique. D'autres formes tubulaires sont possibles, par exemple des formes tubulaires dont la section varie le long de l'axe. Chaque portion tubulaire 34 se prolonge, à son extrémité opposée à l'autre portion tubulaire 34, par une couronne 36 qui s'étend en s'éloignant de l'axe D. Chaque couronne 36 est munie de trous de fixation 38 et est destinée à être fixée à une bride d'un des tronçons. Chaque portion tubulaire 34 et le tronçon correspondant ont des sections intérieures identiques, par exemple de formes identiques à 0,5 mm près.

Chaque portion tubulaire 34 comporte des facettes 40 sur sa surface extérieure, chaque facette étant une face plane parallèle à l'axe D. Les facettes voisines sont séparées par des cloisons 42 qui s'étendent axialement. Les cloisons 42 comportent des prolongements 43 s'étendant au-delà de l'extrémité de la portion tubulaire 34 du côté opposé à la couronne 36.

Le dispositif 30 comprend des lames 44 élastiques et conductrices, dont chacune s'étend axialement et a des extrémités en appui sur deux facettes 40 situées sur les deux portions tubulaires 34. En position de référence, les deux facettes 40 associées à chaque lame sont dans un même plan, par exemple à 2 degrés près. Ainsi, chaque lame est en appui sur chacune des deux portions tubulaires 34, et les extrémités de chaque lame se trouvent entre deux cloisons 42.

Pour chaque pièce d'extrémité, une pièce annulaire 46 d'axe D et composée de portions rectilignes c'est-à-dire de forme polygonale, est fixée aux extrémités des prolongements 43. Chaque portion rectiligne est parallèle à une facette et correspond, dans la pièce 46, à un bras rigide 48 en appui sur une des lames élastiques 44.

Lorsque le dispositif 30 est en place entre deux tronçons dont les extrémités voisines s'approchent ou s'éloignent l'une de l'autre, les lames coulissent axialement entre les cloisons 42 par rapport à l'une et/ou à l'autre des portions tubulaires 34. Les cloisons 42 permettent ainsi de guider les lames 44 au cours du coulissement. Un jeu est prévu entre chaque lame 44 et les cloisons 42 associées afin de permettre des déplacements relatifs dans un sens radial, ou latéral, entre les extrémités des tronçons.

Grâce à l'appui des bras 48, les lames 44 restent en contact électrique avec les portions tubulaires 34 pour des positions variables des extrémités des tronçons. Ainsi, lorsqu'un faisceau de particules circule dans le synchrotron, des courants peuvent avoir un cheminement axial entre les tronçons.

Dans le dispositif 30, la prévision des cloisons 42 entre les lames 44 voisines permet de garantir que les lames restent en place et écarte tout risque que des lames voisines viennent se chevaucher. Le dispositif 30 est donc particulièrement fiable.

A titre d'exemple, les lames 44 sont dans un alliage de cuivre comprenant du béryllium, par exemple entre 1 % et 3 % de béryllium. Les lames peuvent avoir des épaisseurs comprises entre 0,15 et 0,25 mm. La distance séparant chaque bras 48 de la facette 40 la plus proche du bras peut être comprise entre 1 et 5 mm. A titre d'exemple, les pièces d'extrémité peuvent être en acier inoxydable ou en un alliage d'aluminium, par exemple en alliage d'aluminium 7075. A titre d'exemple, la somme des jeux entre une extrémité de lame 44 et chacune des deux cloisons 42 associées, ou jeu total entre extrémité de lame et cloisons, est comprise entre 0,4 et 0,6 mm.

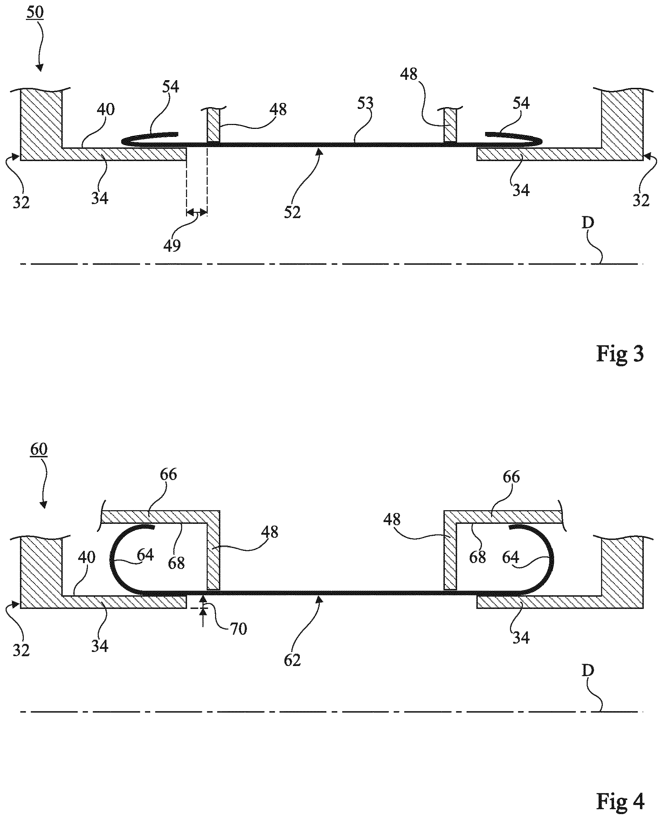

La figure 3 est une coupe partielle et schématique d'un autre mode de réalisation d'un dispositif 50 de raccordement entre deux tronçons d'un conduit annulaire d'un synchrotron. Le dispositif 50 correspond au dispositif 30 de la figure 2 dans lequel les lames 44 ont été remplacées par des lames 52. On retrouve ainsi des pièces d'extrémité 32 comprenant chacune une portion tubulaire 34 et une couronne 36 (partiellement représentée). On retrouve également des bras 48, dont chacun est solidaire d'une des pièces 32 par l'intermédiaire de cloisons 42 qui ne sont pas visibles en figure 3.

Une partie centrale 53 des lames 52 est disposée de la même manière que les lames 44 de la figure 2. Dans ce mode de réalisation, les extrémités des lames 52 comprennent des portions recourbées 54.

A titre d'exemple, chaque portion recourbée prolonge la partie centrale 53 selon une orientation qui évolue d'une orientation axiale à une orientation d'extrémité. Un angle entre l'orientation d'extrémité et l'orientation axiale caractérise chaque portion recourbée. La portion recourbée peut par exemple avoir, en coupe passant par l'axe D, la forme d'un arc de cercle. L'angle qui caractérise la portion recourbée, ou angle de la portion recourbée, correspond alors à l'angle de l'arc de cercle. Dans l'exemple représenté, les portions recourbées sont en forme de demi-tour, c'est-à-dire ont des angles de 180° à 5° près. Les portions recourbées 54 sont recourbées vers l'extérieur, c'est-à-dire que les portions recourbées de chaque lame 52 partent de la partie centrale en s'éloignant de l'axe D.

Lorsque le dispositif 50 n'est pas en place, il peut arriver, par exemple au cours de manipulations, que les pièces d'extrémité 32 s'éloignent l'une de l'autre. Cet éloignement est stoppé lorsque les portions recourbées 54 des lames 52 viennent en butée sur les bras 48. On peut ainsi manipuler le dispositif 50 sans risquer que les éléments du dispositif se séparent.

La figure 4 est une coupe partielle et schématique d'un autre mode de réalisation d'un dispositif 60 de raccordement entre deux tronçons d'un conduit annulaire d'un synchrotron. Le dispositif 60 correspond au dispositif 30 de la figure 2 dans lequel les lames 44 ont été remplacées par des lames 62 dont les extrémités comprennent des portions recourbées 64 qui sont recourbées sur plus d'un demi-tour, c'est-à-dire que les portions recourbées 64 ont des angles supérieurs à 180 degrés. A titre d'exemple, les portions recourbées 64 situées à chaque extrémité sont recourbées sur des angles compris entre 185 et 220 degrés. Les portions recourbées 64 sont recourbées vers l'extérieur. De ce fait, au niveau de l'extrémité de chaque portion tubulaire 34 située du côté des lames, la surface intérieure de la portion tubulaire est séparée des lames par la seule épaisseur 70 de la paroi de la portion tubulaire.

Un bras 66 s'étend axialement à partir de chaque bras 48 en direction de la pièce d'extrémité 32 solidaire du bras 48. Chaque bras 66 a du côté de l'axe D une face 68 parallèle à une facette 40 et située en vis-à-vis de la facette. Chaque portion recourbée 64 appuie d'un côté sur une face 68 et de l'autre sur une facette 40.

Lorsque le dispositif 60 est en place entre des tronçons dont les extrémités s'approchent ou s'éloignent l'une de l'autre, les lames coulissent en même temps sur les facettes 40 et sur les faces 68.

La prévision, dans le dispositif 60, des bras 48 en appui sur les lames 62 et des bras 66 en appui sur les portions recourbées permet de maintenir un contact électrique particulièrement conducteur entre chaque lame 62 et la facette 40 associée. Lorsqu'un faisceau de particules circule dans le synchrotron, la résistance qui s'oppose à l'écoulement axial de courants est donc particulièrement faible.

A titre d'exemple, les portions recourbées 64 d'une lame 62 ont une dimension radiale, ou hauteur, comprise entre 4 et 7 mm. La hauteur qui sépare une facette 40 de la face 68 en vis-à-vis peut être celle qu'aurait une portion recourbée 64 en l'absence de bras 66, moins une hauteur de compression inférieure à 1 mm.

Un avantage des modes de réalisation décrits précédemment est que la prévision des bras rigides solidaires des pièces d'extrémité et en appui sur les lames, chaque lame étant en appui à coulissement sur des facettes des deux portions tubulaires, permet d'assurer un contact électrique particulièrement fiable.

Des modes de réalisation particuliers ont été décrits. Diverses variantes et modifications apparaîtront à l'homme de l'art. En particulier, bien que, dans les modes de réalisation décrits, l'intérieur de chaque portion tubulaire soit cylindrique d'axe D, on peut prévoir, dans d'autres modes de réalisation, des sections internes qui varient progressivement le long de l'axe D. Ainsi, on peut obtenir un dispositif de raccordement entre des tronçons dont les sections intérieures sont de formes différentes. Chaque portion tubulaire a alors, au niveau de l'extrémité du dispositif, une section interne identique à celle du tronçon correspondant. On peut aussi prévoir des portions tubulaires dont la section intérieure, au niveau de l'extrémité située du côté des lames, se rapproche de la section extérieure de la portion tubulaire, de sorte que la portion tubulaire ait à cette extrémité une paroi d'épaisseur (de référence 70 en figure 4) faible, par exemple inférieure à 0,5 mm.

De plus, bien que, dans des modes de réalisation décrits, les lames s'étendent axialement, on peut prévoir d'autres modes de réalisation de dispositifs de raccordement entre des tronçons dont les sections intérieures sont de forme différentes, dans lesquels les lames peuvent aussi s'étendre selon une direction faisant avec l'axe D un angle faible, par exemple inférieur à 5 degrés.

En outre, bien que les bras 48 soient des bras d'une pièce annulaire 46 solidaire d'une pièce d'extrémité 32, les bras peuvent être fixés sur la pièce d'extrémité 32 de n'importe quelle autre manière compatible avec le coulissement des lames élastiques sur les facettes. Par exemple, dans des variantes des modes de réalisation décrits en relation avec les figures 3 et 4, les bras 66 qui prolongent les bras peuvent être fixés à une face des cloisons 42 située du côté opposé à l'axe D, les prolongements 43 des cloisons pouvant alors être omis.

Bien que, dans les modes de réalisation décrits en relation avec la figure 4, des bras 48 et des bras 68 soient en appui sur les lames élastiques, d'autres modes de réalisation sont possibles dans lesquels seuls les bras 66 sont en appui sur les lames élastiques.

Bien que, dans les modes de réalisation décrits, les lames soient disposées entre les cloisons de guidage 42, les lames peuvent aussi être guidées par tout élément de guidage propre à assurer que les lames restent en place et à écarter tout risque que des lames voisines viennent se chevaucher.

## Revendications

1. Dispositif de raccordement électrique entre deux tronçons successifs du conduit annulaire d'un synchrotron, comprenant :
des première et deuxième pièces d'extrémité (32) adaptées à être fixées aux tronçons, chacune comportant une portion tubulaire (34) à facettes (40) ;
des lames (44 ; 52 ; 62) élastiques et électriquement conductrices, dont chacune est en appui sur chacune des deux portions tubulaires, chaque appui étant à coulissement sur une desdites facettes ; et
au moins un bras (48 ; 66) en appui sur chaque lame, chaque bras étant solidaire de l'une des pièces d'extrémité.

2. Dispositif selon la revendication 1, dans lequel ledit au moins un bras comprend des premier et deuxième bras (48 ; 66) en appui radial vers l'intérieur sur chaque lame (44 ; 52 ; 62), le premier bras étant solidaire de la première pièce d'extrémité (32) et le deuxième bras étant solidaire de la deuxième pièce d'extrémité (32).

3. Dispositif selon la revendication 2, dans lequel les extrémités de chaque lame (52 ; 62) se prolongent par des portions recourbées (54 ; 64).

4. Dispositif selon la revendication 3, dans lequel :
les portions recourbées (64) sont recourbées sur plus d'un demi-tour ; et
pour chaque lame, chacun des bras en appui sur la lame est solidaire d'un troisième bras (66) comprenant une surface plane (68) en appui sur la portion recourbée.

5. Dispositif selon la revendication 4, dans lequel les portions recourbées (64) sont recourbées sur un angle compris entre 185 et 220 degrés.

6. Dispositif selon l'une quelconque des revendications 1 à 5, comportant des éléments (42) de guidage des lames (44 ; 52 ; 62).

7. Dispositif selon la revendication 6, dans lequel les éléments de guidage des lames sont des cloisons (42) disposées entre les facettes (40) des portions tubulaires (34).

8. Dispositif selon la revendication 7, dans lequel le jeu total entre chaque extrémité de lame et les cloisons de guidage (42) associées est compris entre 0,4 et 0,6 mm.

9. Dispositif selon l'une quelconque des revendications 1 à 8, dans lequel la portion tubulaire (34) d'une pièce d'extrémité destinée à être fixée à un premier tronçon a une section intérieure du côté de l'extrémité du dispositif de forme identique à 0,5 mm près à celle de la section intérieure du premier tronçon.

10. Dispositif selon l'une quelconque des revendications 1 à 9, dans lequel chaque portion tubulaire (34) a des parois dont l'épaisseur est inférieure à 0,5 mm à l'extrémité de la portion tubulaire située du côté des lames.

11. Dispositif selon l'une quelconque des revendications 1 à 10, dans lequel la distance entre ledit au moins un bras et la facette la plus proche dudit au moins un bras est comprise entre 1 et 5 mm.

12. Synchrotron comprenant des tronçons raccordés par un dispositif selon l'une quelconque des revendications 1 à 11.

## Patentansprüche

1. Eine Vorrichtung zur elektrischen Verbindung zwischen zwei aufeinanderfolgenden Abschnitten der ringförmigen Leitung eines Synchrotrons, die Folgendes aufweist:
erste und zweite Endteile (32), die geeignet sind, an den Abschnitten fixiert zu werden, wobei jedes ein rohrförmiges Teil (34) mit Facetten (40) aufweist;
elektrisch leitende elastische Finger (44; 52; 62), von denen jeder jeden der zwei rohrförmigen Teile kontaktiert, wobei jeder Kontakt ein Gleitkontakt mit einer der Facetten ist; und
wenigstens ein Arm (48; 66), der auf jeden Finger wirkt, wobei jeder Arm in Bezug auf einen der Endteile fixiert ist.

2. Vorrichtung nach Anspruch 1, wobei wenigstens ein Arm erste und zweite Arme (48; 66) aufweist, die radial auf jeden Finger (44; 52; 62) zur Innenseite hin wirken, wobei der erste Arm in Bezug auf den ersten Endteil (32) fixiert ist und der zweite Arm in Bezug auf den zweiten Endteil (32) fixiert ist.

3. Vorrichtung nach Anspruch 2, wobei die Enden jeder Finger (52; 62) durch bogenförmige Teile (54; 64) verlängert werden.

4. Vorrichtung nach Anspruch 3, wobei:
die bogenförmigen Teile (64) um mehr als eine halbe Umdrehung gebogen sind; und
für jeden Finger jeder der Arme, der auf den Fingern wirkt, in Bezug auf einen dritten Arm (66) fixiert ist, der eine planare Oberfläche (68), die auf den bogenförmigen Teil wirkt, aufweist.

5. Vorrichtung nach Anspruch 4, wobei die bogenförmigen Teile (64) durch einen Winkel in dem Bereich von 185 bis 220 Grad gebogen sind.

6. Vorrichtung nach einem der Ansprüche 1 bis 5, wobei die Finger (44; 52; 62) Führungselemente (42) aufweisen.

7. Vorrichtung nach Anspruch 6, wobei die Fingerführungselemente Trennelemente (42) sind, die zwischen den Facetten (40) der rohrförmigen Teile (34) angeordnet sind.

8. Vorrichtung nach Anspruch 7, wobei der Gesamtfreiraum zwischen jedem Fingerende und den assoziierten Führungstrennelementen (42) in dem Bereich von 0,4 bis 0,6 mm liegt.

9. Vorrichtung nach einem der Ansprüche 1 bis 8, wobei das rohrförmige Teil (34) eines Endteils, das vorgesehen ist, um an einem ersten Abschnitt fixiert zu werden, einen Innenquerschnitt an der Endseite der Vorrichtung besitzt, der eine Form besitzt, die identisch mit einer Toleranz bis zu 0,5 mm zu der Form des Innenquerschnitts des ersten Abschnitts ist.

10. Vorrichtung nach einem der Ansprüche 1 bis 9, wobei jedes rohrförmige Teil (34) Wände besitzt mit einer Dicke kleiner als 0,5 mm am Ende des rohrförmigen Teils, das an der Fingerseite angeordnet ist.

11. Vorrichtung nach einem der Ansprüche 1 bis 10, wobei der Abstand zwischen dem wenigstens einen Arm und der Facette, die am nächsten zu dem wenigstens einen Arm ist, in dem Bereich von 1 bis 5 mm liegt.

12. Ein Synchrotron, das Abschnitte aufweist, die durch die Vorrichtung nach einem der Ansprüche 1 bis 11 verbunden ist.

## Claims

1. A device of electric connection between two successive sections of the ring-shaped pipe of a synchrotron, comprising:
first and second end parts (32) capable of being fastened to the sections, each comprising a tubular portion (34) with facets (40) ;
electrically-conductive resilient fingers (44; 52; 62), each of which contacts each of the two tubular portions, each contact being a sliding contact with one of said facets; and
at least one arm (48; 66) bearing on each finger, each arm being fixed with respect to one of the end parts.

2. The device of claim 1, wherein said at least one arm comprises first and second arms (48; 66) bearing radially on each finger (44; 52; 62) towards the inside, the first arm being fixed with respect to the first end part (32) and the second arm being fixed with respect to the second end part (32).

3. The device of claim 2, wherein the ends of each finger (52; 62) are extended by curved portions (54; 64).

4. The device of claim 3, wherein:
the curved portions (64) are curved by more than a half-turn; and
for each finger, each of the arms bearing on the finger is fixed with respect to a third arm (66) comprising a planar surface (68) bearing on the curved portion.

5. The device of claim 4, wherein the curved portions (64) are curved by an angle in the range from 185 to 220 degrees.

6. The device of any of claims 1 to 5, comprising finger (44; 52; 62) guiding elements (42).

7. The device of claim 6, wherein the finger guiding elements are partitions (42) arranged between the facets (40) of the tubular portions (34).

8. The device of claim 7, wherein the total clearance between each finger end and the associated guiding partitions (42) is in the range from 0.4 to 0.6 mm.

9. The device of any of claims 1 to 8, wherein the tubular portion (34) of an end part intended to be fastened to a first section has an inner cross-section on the end side of the device having a shape identical to within 0.5 mm to that of the inner cross-section of the first section.

10. The device of any of claims 1 to 9, wherein each tubular portion (34) has walls having a thickness smaller than 0.5 mm at the end of the tubular portion located on the finger side.

11. The device of any of claims 1 to 10, wherein the distance between said at least one arm and the facet closest to said at least one arm is in the range from 1 to 5 mm.

12. A synchrotron comprising sections connected by the device of any of claims 1 to 11.
